# EUROPEAN PATENT SPECIFICATION

(11) **EP 1 642 789 B1**
(45) Date of publication and mention of the grant of the patent: **02.01.2008**
(21) Application number: 05017407.7
(22) Date of filing: 10.08.2005
(51) Int. Cl.: B60R 25/00, B60R 25/10

(54) **Smart keyless system control unit**
Steuereinheit für ein Keyless Entry System
Dispositif de commande pour une système passif d'entrée sans clef

(30) Priority: 30.09.2004 JP 2004288425
(43) Date of publication of application: 05.04.2006
(73) Proprietor: Mazda Motor Corporation, Aki-gun, Hiroshima 730-8670 (JP)
(72) Inventor: Hamada, Yasushi, Aki-gun Hiroshima 730-8670 (JP)
(74) Representative: Thoma, Michael

(56) References cited:
- EP-A- 1 346 888
- DE-A1- 4 325 505

## Description

### TECHNICAL FIELD

The present invention relates to a smart keyless system control unit which permits doors to be locked/unlocked or an engine to start when an ID signal sent from a portable unit is authenticated.

### BACKGROUND ART

Japanese Unexamined Patent Publication No. 2003-269019 discloses a vehicular control system which permits doors to be locked/unlocked or an engine to start when an ID signal sent from a portable unit is authenticated. The portable unit functions as a common key. However, unlike the common key, there is no need to operate the portable unit by hand and a user is allowed to do various vehicle-related operations as long as he carries the portable unit in his pocket or bag. Such a control system is called smart keyless system.

In a vehicle which is not provided with the smart keyless system, a key must be inserted in a key cylinder or the like while the engine is running. Therefore, the key cannot be taken out of the vehicle while the engine is running. That is, until the engine stops, i.e., until a passenger who carries the key gets out of the vehicle, the key which permits the doors to be locked/unlocked or the engine to start will not be taken out of the vehicle. In a vehicle provided with the smart keyless system, on the other hand, there is no need to keep the key inserted. However, this advantage brings about various problems.

For example, the portable unit can be taken out of the vehicle even if the engine is running. If the portable unit has been taken out of the vehicle by a person other than the driver and the driver is not aware of the fact that the unit has been taken out, the driver cannot lock/unlock the doors or start the engine next time he needs to do so in the absence of the portable unit. Therefore, at least when the portable unit is taken out of the vehicle when the engine is running, the driver needs to be informed of it. As a possible example of a technique for that purpose, a request signal is sent from an on-vehicle device to the portable unit at a predetermined timing and a certain alarm is given when the portable unit does not send an ID signal in response to the request signal, or a received ID signal is not authenticated.

EP-A-1 346 888 discloses a control unit of a smart keyless system with the features of the preamble part of claim 1.

### PROBLEMS THAT THE INVENTION IS TO SOLVE

On the other hand, power supply harnesses which are arranged in a vehicle compartment or the vicinity of the vehicle compartment generate electromagnetic noise derived from surge noise of an alternator. When the portable unit is placed near the power supply harnesses, e.g., on a dashboard, the electromagnetic noise may become jamming to hinder the portable unit from receiving the request signal from the on-vehicle device. As a result, the on-vehicle device fails to recognize the presence of the portable unit and causes an erroneous alarm, though in fact the portable unit is present in the vehicle.

### DISCLOSURE OF THE INVENTION

The present invention has been achieved to solve the above-described problems. An object of the present invention is to avoid the influence of electromagnetic noise caused by surge noise of an alternator to allow detection of a portable unit present in a vehicle with accuracy, thereby reducing the possibility of causing erroneous alarms.

According to an aspect of the present invention, there is provided a control system of a smart keyless system comprising an on-vehicle system mounted on a vehicle and a portable unit which are configured to achieve wireless communication, wherein
the on-vehicle system includes a sender which sends a request signal, a receiver which receives an ID signal sent by the portable unit which has received the request signal, and
a control means which commands the sender to send the request signal when a predetermined condition is met and controls at least one of door lock/unlock and engine start permission when the authentication of the ID signal received by the receiver succeeds,
the vehicle is provided with an alternator which generates an output at least when an engine is running and feeds the output to electrical components arranged in a vehicle compartment and/or near the vehicle compartment via a power supply harness and
the control means commands the sender to send the request signal at least when the engine is running and gives a predetermined alarm when the authentication of the ID signal received by the receiver does not succeed, and further includes a reduction control part which reduces the output of the alternator when the sender sends the request signal.

With this configuration, when the sender sends the request signal, the output of the alternator is reduced by the reduction control part. Therefore, the electromagnetic noise caused by the surge noise from the alternator is reduced. As a result, the request signal from the sender is not hindered by the electromagnetic noise and the portable unit properly receives the request signal. Thus, the possibility of causing erroneous alarms is reduced.

According to a suitable embodiment of the present invention, the control means commands the sender to send the request signal after a predetermined time has elapsed from when the output of the alternator was reduced. With this configuration, the request signal is sent after the surge noise of the alternator has been surely reduced. Therefore, the possibility of causing erroneous alarms is further reduced.

According to a suitable embodiment of the present invention, the control means commands the sender to send the request signal when a door of the vehicle is open and/or vehicle speed is not higher than a predetermined value and allows the reduction control part to reduce the output of the alternator at the time when the door is opened and/or the vehicle speed is reduced to not higher than the predetermined value. With this configuration, the alarm is not caused when the possibility that the key will be taken out of the vehicle is low, i.e., when the doors are closed or the vehicle speed is higher than the predetermined speed. Instead, the alarm is caused when the possibility that the key will be taken out of the vehicle is high, i.e., when any of the doors is opened or the vehicle speed is lower than the predetermined speed. Therefore, the output of the alternator is reduced at a suitable timing that allows detection of the portable unit present in the vehicle and prevention of the occurrence of the erroneous alarms with reliability.

According to a suitable embodiment of the present invention, the vehicle is provided with a battery which is charged by the output of the alternator and the reduction control part does not reduce the output of the alternator when the charged capacity of the battery is not higher than a predetermined level. With this configuration, the battery is prevented from going dead.

According to a suitable embodiment of the present invention, the reduction control part allows the output of the alternator to recover after the request signal has been sent by the sender and the rate of reducing the output of the alternator is higher than the rate of recovering the output of the alternator. With this configuration, the request signal is sent quickly, while a sudden drop of engine torque in recovering the output of the alternator is inhibited.

As described above, according to the present invention, the influence of the electromagnetic noise derived from the surge noise of the alternator is avoided to allow detection of the portable unit in the vehicle with accuracy, thereby reducing the possibility of the occurrence of erroneous alarms.

### BRIEF DESCRIPTION OF THE DRAWINGS

FIG. **1** is a view illustrating an in-vehicle arrangement of a smart keyless system to which an embodiment of a smart keyless control unit of the present invention is applied.
FIG. **2** is a block diagram illustrating the configuration of the smart keyless system.
FIG. **3** is a view illustrating communication areas of LF sender antennas according to the embodiment of the present invention.
FIG. **4** is a flow chart illustrating the operation of causing an alarm when a card key is taken outside the vehicle according to the embodiment of the present invention.
FIG. **5** is a flow chart illustrating the operation of reducing an output of an alternator according to the embodiment of the present invention.
FIG. **6** is a flow chart illustrating the operation of recovering the output of the alternator according to the embodiment of the present invention.
FIG. **7** is a view illustrating an example of a control circuit for the alternator.
FIG. **8** is a view illustrating how the alternator generates surge noise.

### BEST MODE FOR CARRYING OUT THE INVENTION

Hereinafter, with reference to the attached drawings, an explanation is given of a preferred embodiment of the present invention.

### [Configuration of smart keyless system]

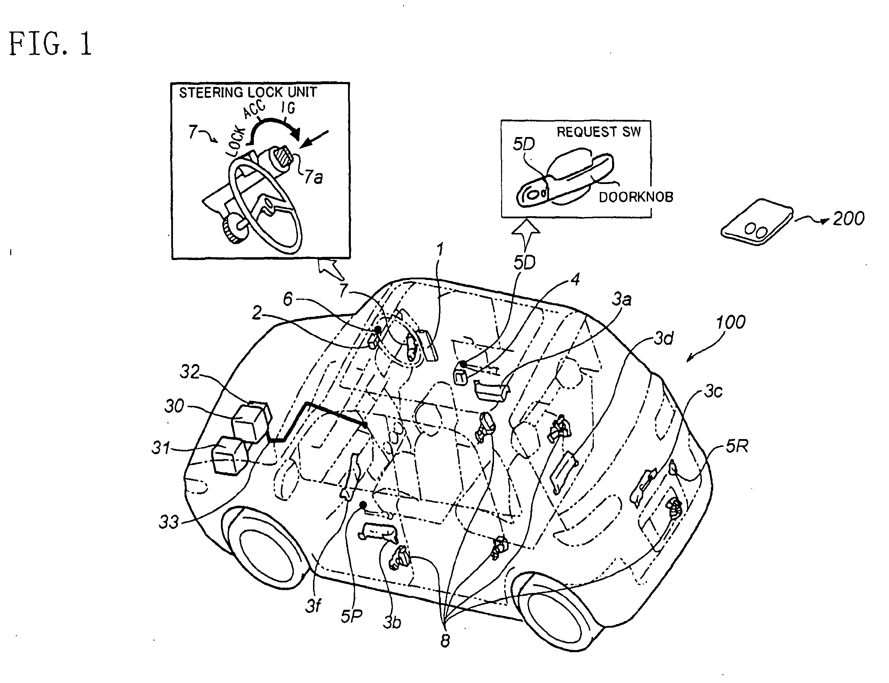

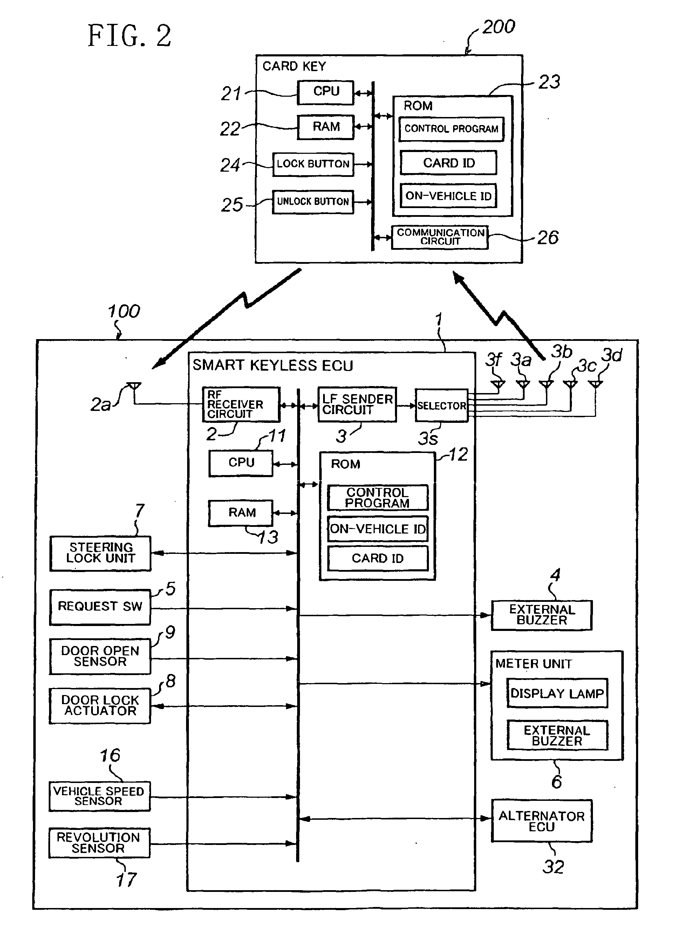

FIG. **1** shows an in-vehicle arrangement of a smart keyless system to which a smart keyless system control unit of the present invention is applied and FIG. **2** is a block diagram illustrating the configuration of the smart keyless system. As shown in the figures, the smart keyless system includes an on-vehicle system **100** which is mounted on a vehicle and a card key **200** as a portable unit to be carried by a user. The on-vehicle system **100** and the card key **200** are configured to establish communication by radio waves.

### (Card key)

The card key **200** includes, as specifically described in FIG. **2,** a CPU **21** which is responsible for operations of the card key, a RAM **22** which provides a work area of the CPU **21,** a ROM **23** which stores programs and data, a lock button **24** and an unlock button **25** operated by a user and a communication circuit **26** for communicating with the on-vehicle system **100.** The ROM **23** stores, for example, control programs for realizing authentication communication with the on-vehicle system **100,** ID information which is unique to the card key **200** (card ID) and ID information for identifying the on-vehicle system **100** (on-vehicle system ID). The CPU **21** loads a control program stored in the ROM **23** into the RAM **22** to execute it. For example, when the user presses the button (lock button **24** or unlock button **25)** or an LF signal from the on-vehicle system **100** is received, the CPU **21** drives the communication circuit **26** to send an RF signal (e.g., UHF) as an ID signal containing the card ID to the on-vehicle system **100.** The card key **200** is a card of about 80 × 50 × 4 mm, for example. Therefore, the user can easily carry the card key in his pocket or bag.

Now, an explanation is given of the configuration of the on-vehicle system **100.**

### (Smart keyless controller 1)

A smart keyless controller **1** serves as a smart keyless system control unit and is responsible for control of the smart keyless system. More specifically, as shown in FIG. **2,** the smart keyless controller **1** is a smart keyless ECU. The smart keyless ECU includes a CPU **11,** a ROM **12,** a RAM **13,** an RF receiver circuit **2** which receives RF signals via an RF receiver antenna **2a,** a selector **3s** which selects any of, for example, 5 LF sender antennas **(3f, 3a, 3b, 3c** and **3d)** to be described later, and an LF sender circuit **3** which sends LF signals via the selector **3s.** The ROM **12** stores control programs for realizing authentication communication with the card key **200** and controlling components described later, ID information unique to the on-vehicle system **100** (on-vehicle system ID) and ID information for identifying the card key **200** (card ID). The ROM **12** can register up to 6 ID cards. That is, though FIGS. **1** and **2** describe only a single card key **200,** additional 5 card keys can be registered as available ones. However, in the following explanation, it is assumed that only a single card key **200** is registered and therefore the ROM **12** stores only a single card ID of the card key **200.**

### (LF sender antenna)

In this embodiment, 5 LF sender antennas **(3f, 3a, 3b, 3c** and **3d)** are provided as described above. Provided are an in-vehicle front antenna **3f** which is arranged at the front side of a vehicle compartment, a driver's seat antenna **3a** (hereinafter abbreviated as D-seat antenna) which is arranged near the driver's seat, a passenger's seat antenna **3b** (hereinafter abbreviated as P-seat antenna) which is arranged near the passenger's seat, a rear gate antenna **3c** which is arranged near the rear gate and an in-vehicle rear antenna **3d** which is arranged near the rear seat. By performing switching between these sender antennas, different communication areas (i.e., card key detection areas) are provided. The D-seat antenna **3a** and the P-seat antenna **3b** cover both an inside area and an outside area of the vehicle. The LF sender circuit **3** is operated in an external output mode or an internal output mode. Depending on the output mode, the communication areas of the D-seat antenna **3a** and the P-seat antenna **3b** are switched between the inside and outside areas.

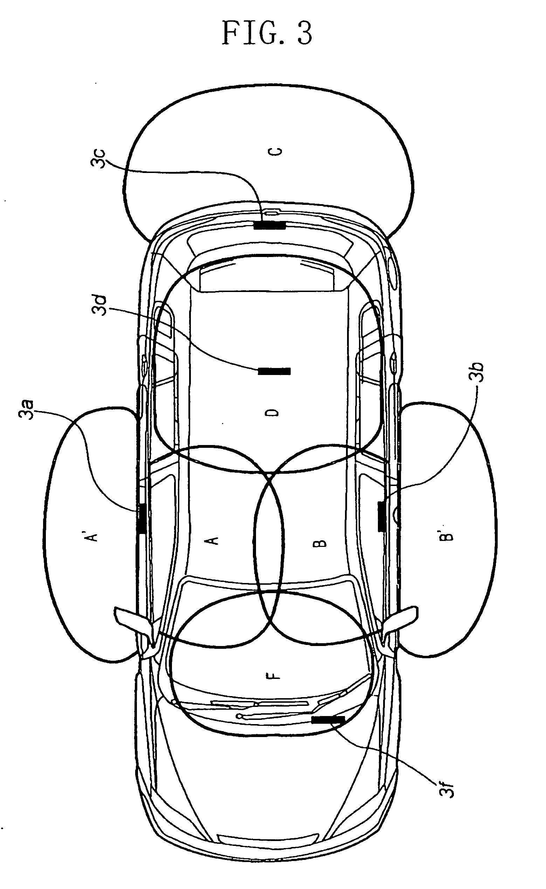

FIG. **3** illustrates the communication areas covered by the LF sender antennas. Regions **F, A, B** and **D** inside the vehicle are defined as communication areas covered by the in-vehicle front antenna **3f,** D-seat antenna **3a,** P-seat antenna **3b** and in-vehicle rear antenna **3d,** respectively. These four antennas cover all the regions of the vehicle compartment. An external region **C** behind the vehicle is covered by the rear gate antenna **3c.** Further, external regions **A'** and **B'** are covered by the D-seat antenna **3a** and the P-seat antenna **3b,** respectively, when the LF sender circuit **3** is in the external output mode.

### (External buzzer)

An external buzzer **4** gives an alarm to the user outside the vehicle in response to a signal from the smart keyless controller **1.**

### (Request switch)

Request switches (abbreviated as request SWs) are provided as a trigger for the operation of locking/unlocking the doors (including the rear gate, the same is applied hereinafter). FIG. **1** shows request SWs **5D, 5P** and **5R.** Each of the request SWs is arranged near a doorknob (outer handle) as shown in an enlarged view of **5D.**

### (Door lock actuator)

Door lock actuators **8** perform the operation of locking/unlocking the doors, respectively. As described below, when one of the request SWs is pressed, the door lock actuator **8** for the door corresponding to the pressed request SW is driven to lock/unlock the door.

### (Meter unit)

A meter unit **6** includes a vehicle speed meter, an engine revolution meter, a lamp and an internal buzzer for giving an alarm and allows the internal buzzer to beep or the lamp to come on/blink.

### (Steering lock unit)

A steering lock unit **7** executes the operation of locking a key cylinder in response to a signal from the smart keyless controller **1.** As shown in an enlarged view of the steering lock unit **7** in FIG. **1,** the steering lock unit **7** includes an ignition knob **7a.** The ignition knob **7a** can be turned from the LOCK position to the accessory (ACC) position and to the ignition (IG) position. The ignition knob **7a** is provided with a knob locking system which does not allow the ignition knob **7a** to turn without permission of the smart keyless controller **1.** Further, the ignition knob **7a** is so configured that it can be pressed down at the LOCK position. The pressing of the knob **7a** is recognized as an action requesting the knob locking system to unlock the knob **7a.**

### (Sensor)

Various sensors have been used in the vehicle. In this embodiment, a door open sensor **9** which senses that the doors are open, a vehicle speed sensor **16** which senses the vehicle speed and a revolution sensor **17** which senses the number of revolutions of the engine are provided.

### (Alternator ECU)

As shown in FIG. **1,** the vehicle of this embodiment includes a generator (hereinafter referred to as an alternator) **30** which generates electric power from the engine's mechanical energy and a battery **31** which is connected between the alternator **30** and an earth and charged by the output of the alternator **30.** For example, the battery **31** is used as a power supply for an engine starter. Depending on output voltage of the battery **31** and the engine revolutions, an alternator ECU **32** (a generator ECU) controls exciting current of the alternator **30,** thereby controlling the output of the alternator **30.** The alternator ECU **32** is connected to the smart keyless controller **1** as shown in FIG. **2** and controls the exciting current of the alternator **30** in response to a control signal from the smart keyless controller **1.**

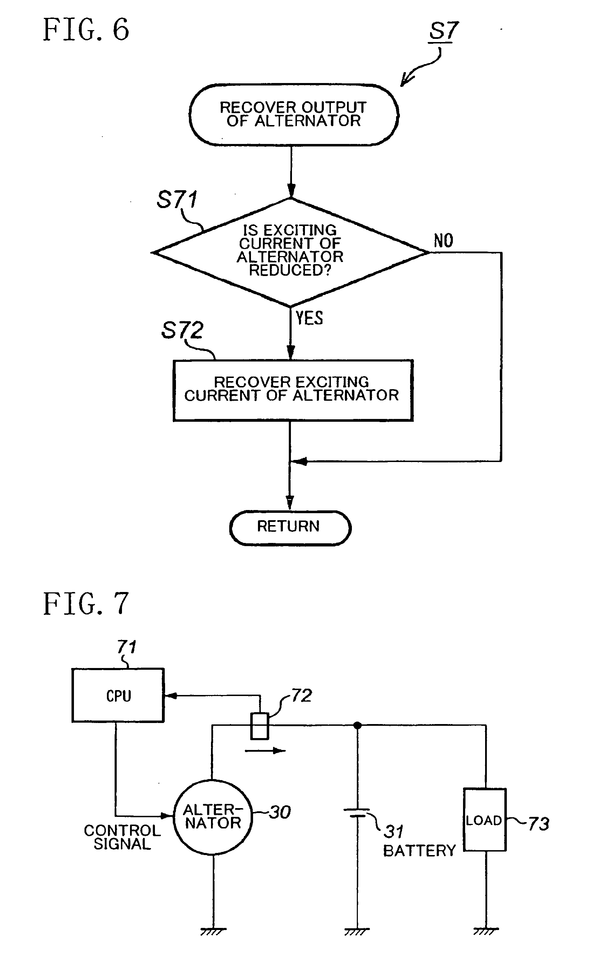

Now, an explanation is given of the control operation by the alternator **30.** That is, on what basis does the alternator **30** increase or decrease the current is described. In a control circuit shown in FIG. **7,** a CPU **71** (CPU for the alternator ECU **32)** switches the current of the alternator **30** between high and extremely low (almost 0). More specifically, when a current value of a current sensor **72** is higher than a predetermined reference value (various reference values are given depending on the switching), i.e., when the battery **31** is in a discharge state and/or a load **73** of electric components is high, the current of the alternator **30** is allowed to increase. On the other hand, when the current value sensed by the current sensor **72** is below the reference value, i.e., the battery **31** is in a discharge state and/or the load **73** of the electric components is low, the current of the alternator **30** is allowed to decrease.

Whether the current of the alternator **30** has been reduced or not is recognized by a control signal which is output from the CPU **71** to the alternator **30.**

### [Authentication communication]

The smart keyless system of this embodiment is generally configured as described above. With this configuration, the smart keyless controller **1** achieves authentication communication with the card key **200.**

The authentication communication includes, for example, first authentication for ID matching and second authentication of a challenge/response mode. In the first authentication, the smart keyless controller **1** selects one of the LF sender antennas **3f, 3a, 3b, 3c** and **3d** to send an LF signal containing the on-vehicle system ID stored in the ROM **12** as a request signal. The selection of the LF sender antenna is dependent on the function to be executed and defined as output patterns.

Upon receipt of the LF signal, the card key **200** extracts the on-vehicle device ID contained in the LF signal and checks whether the extracted on-vehicle device ID matches the on-vehicle device ID stored in the memory **23.** When the IDs match, the card key **200** sends an RF signal as an ID signal containing the card ID and the on-vehicle system ID stored in the memory **23** through the communication circuit **26.**

When the RF signal reaches the RF receiver circuit **2** through the RF receiver antenna **2a,** the smart keyless controller **1** checks whether the card ID and the on-vehicle system ID contained in the RF signal match the card ID and the on-vehicle system ID stored in the ROM **12.** At this point, the first authentication is completed.

When the first authentication has succeeded, the operation goes to the second authentication. First, the smart keyless controller **1** sends an LF signal containing an optional challenge data via the LF sender antenna which has been used in the first authentication.

Upon receipt of the LF signal, the card key **200** encrypts the challenge data contained in the LF signal using a private key K and sends an RF signal containing the encrypted data as a response data through the communication circuit **26.**

When the RF signal reaches the RF receiver circuit **2** through the RF receiver antenna **2a,** the smart keyless controller **1** decrypts the response data contained in the RF signal using the private key K and checks whether the decrypted data matches the original challenge data. When the data match, the authentication succeeds. On the other hand, when the data do not match, or the response from the card key to the LF signal sent in the first or second authentication is not obtained before time out (a certain period of time elapses), the authentication ends in failure.

In this manner, the authentication communication of this embodiment is carried out by the first authentication based on simple ID matching and the second authentication using encryption technology. By so doing, the card key becomes harder to counterfeit, thereby protecting the vehicle from theft. However, it should be understood that the above-described authentication communication is merely an example and other authentication technologies may also be applicable.

By making use of the above-described authentication communication, the presence of the registered particular card key (card key **200** in this embodiment) is checked. For example, checking whether the card key **200** is present in the vehicle or not (hereinafter referred to as in-vehicle authentication) is carried out in the following manner.

As described above, every region of the vehicle compartment is covered by the four antennas including the in-vehicle front antenna **3f,** D-seat antenna **3a,** P-seat antenna **3b** and in-vehicle rear antenna **3d.** Therefore, if an LF signal is sent to the antennas **3f, 3a, 3b** and **3d** in sequence and a response is given by any of the antennas, it is judged that the card key is at least present in the vehicle. Then, the above-described authentication communication is carried out with the antenna which responded first, whether the card key present in the vehicle is the registered one or not is judged. When the four antennas do not respond to the LF signal, it is judged that the card key is not present in the vehicle.

### [Capabilities of the smart keyless system]

Capabilities which are exhibited by controlling the timing of the authentication communication and LF signal output patterns are explained below.

### (Smart entry)

When a user carrying the card key **200** presses the request SW provided on the door, the smart keyless controller **1** and the card key **200** communicate with each other to allow the door to lock/unlock. This is called smart entry. According to the conventional keyless entry system, the user has to take the key out and operate it by hand. However, the smart entry eliminates such a nuisance and the user can lock/unlock the door with the card key kept in his pocket or bag. The locking/unlocking operation of the door is carried out as a result of the following authentication communication.

### -Door unlocking operation-

In unlocking the door, one of the request SWs **5D, 5P** and **5R** is pressed to be turned ON. At this time, the authentication communication is carried out to check whether the card key **200** is present outside the door corresponding to the pressed request SW. When the presence of the card key **200** is recognized, the door lock actuator **8** corresponding to the door is driven to unlock the door.

A condition for starting the authentication may be the following initiation condition 1.

### [Initiation condition 1]

### -The request SW corresponding to the locked door is turned from OFF to ON.

When the initiation condition **1** is met by turning the request SW **5D** ON, for example, the smart keyless controller **1** switches the LF sender circuit **3** to the external output mode. Then, the D-seat antenna **3a** is selected to send an LF signal to the communication area **A'** (see FIG. **3)** to implement the authentication communication. Likewise, where the request SW **5P** is turned ON, the smart keyless controller **1** switches the LF sender circuit **3** to the external output mode. Then, the P-seat antenna **3b** is selected to send an LF signal to the communication area **B'** to implement the authentication communication. Further, where the request SW **5R** is turned ON, the smart keyless controller **1** selects the rear gate antenna **3c** to send an LF signal to the communication area **C** to implement the authentication communication.

### -Door locking operation-

In locking the door, one of the request SWs **5D, 5P** and **5R** is pressed to be turned ON. At this time, the authentication communication is carried out to (1) check whether the card key **200** is present outside the door corresponding to the pressed request SW and (2) confirm the absence of the card key **200** from the vehicle compartment. When the presence of the card key outside the door and the absence of the card key from the vehicle compartment are recognized, the door lock actuator **8** corresponding to the door is driven to lock the door.

A condition for starting the authentication may be the following initiation condition 2.

### [Initiation condition 2]

### -The request SW corresponding to the unlocked door is turned from OFF to ON.

When the initiation condition 2 is met by turning the request SW **5D** ON, for example, the smart keyless controller **1** switches the LF sender circuit **3** to the external output mode. Then, the D-seat antenna **3a** is selected to send an LF signal to the communication area **A'** (see FIG. **3)** to implement the authentication communication. Likewise, where the request SW **5P** is turned ON, the smart keyless controller **1** switches the LF sender circuit **3** to the external output mode. Then, the P-seat antenna **3b** is selected to send an LF signal to the communication area **B'** to implement the authentication communication. Further, where the request SW **5R** is turned ON, the smart keyless controller **1** selects the rear gate antenna **3c** to send an LF signal to the communication area **C** to implement the authentication communication.

The smart entry system according to this embodiment is as described above. In addition to this, the locking/unlocking of the door may be remote-controlled by operating the lock button **24** or the unlock button **25** of the card key **200** in the same manner as employed in the conventional keyless entry system.

### [Smart start]

Smart start is a capability that allows an engine to start as long as the card key **200** is present in the vehicle and eliminates the need of taking the key out and inserting it into the ignition keyhole. According to the smart start capability, after the presence of the card key **200** is confirmed as described above, the ignition knob **7a** is unlocked to permit the engine to start.

The authentication for the smart start is carried out to check the presence of the card key **200** in the vehicle when the ignition knob **7a** is set at the LOCK position (see FIG. **1**). When the presence is confirmed, the ignition knob **7a** is unlocked.

A condition for starting the authentication may be the following initiation condition 3.

### [Initiation condition 3]

- The ACC is OFF and the IG is OFF (i.e., the ignition knob **7a** is set at the LOCK position) and any of the following conditions is met:
   (1) the ignition knob **7a** is depressed;
   (2) where the engine revolutions are less than 500 rpm and any of the closed doors is opened;
   (3) where the engine revolutions are less than 500 rpm and every open door is closed; and
   (4) the ACC and the IG are turned from ON to OFF.

When the initiation condition 3 is met, the above-described in-vehicle authentication is carried out. More specifically, an LF signal is sent from the in-vehicle front antenna **3f,** D-seat antenna **3a,** P-seat antenna **3b** and in-vehicle rear antenna **3d** in sequence and the LF sender antenna which received a response first is used for the authentication communication (antenna selection). Then, the authentication communication is implemented with the selected LF sender antenna.

If the authentication succeeds, the smart keyless controller **1** outputs an unlocking signal to the steering lock unit **7** to unlock the ignition knob **7a.** By so doing, the ignition knob **7a** is unlocked and the user is allowed to turn the ignition knob **7a** from the LOCK position to the ACC position, and to the IG position to start the engine.

The in-vehicle authentication (antenna selection and authentication communication) is repeated every predetermined time until the following termination condition 1 is satisfied.

### [Termination condition 1]

### -Any of the following conditions is met:

(1) (the authentication has succeeded and) the ACC or the IG is turned ON; and
(2) the authentication has failed three times in a row when every door is closed and the ACC and the IG are OFF.

To save throughput, the predetermined time defined as an authentication cycle time may be varied between the case when the authentication fails and when the authentication succeeds. For example, the cycle time may be set to 1 second when the authentication has failed, whereas it is switched to 3 seconds when the authentication has succeeded).

### (Capability of giving an alarm if the card key is taken out of the vehicle)

The capability of giving an alarm if the card key is taken out of the vehicle is executed to give an alarm when the card key **200** is taken out of the vehicle in a particular situation such as when the engine is running. This capability prevents the occurrence of a situation where the user cannot restart the engine because the card key has been taken away.

In general, the card key is taken out of the vehicle in opening and closing the door. Therefore, the in-vehicle authentication is carried out when the door is opened or closed to confirm the presence of the card key **200** in the vehicle. Even if the doors are all closed, the card key may be taken out of the vehicle through the window. Therefore, it is necessary to continuously perform the in-vehicle authentication in the vehicle not only in opening and closing the door but also after the doors have been closed.

First, an explanation is given of the operation in opening the door. In this case, the initiation condition may be the following initiation condition 4.

### [Initiation condition 4]

- The ACC or the IG is ON and any of the doors is opened.

When the initiation condition 4 is met, the in-vehicle authentication is carried out. More specifically, an LF signal is sequentially sent from the four antennas including the in-vehicle front antenna **3f,** D-seat antenna **3a,** P-seat antenna **3b** and in-vehicle rear antenna **3d** which cover every region of the vehicle compartment and the LF sender antenna which received a response first is used for the authentication communication (antenna selection). Then, the authentication communication is implemented with the selected LF sender antenna.

If the authentication has failed, the external buzzer **4** and/or the internal buzzer of the meter unit **6** is actuated to give an alarm. The alarm may be a simple beep or a chime but a voice message may also be given. The voice message may be, for example, "Card key has been taken outside. Please confirm." In addition, a display lamp of the meter unit **6** may be allowed to blink.

The above-described in-vehicle authentication is carried out repeatedly every predetermined time until the following termination condition 2 is met. The alarm is continuously given until the authentication succeeds or the following termination condition 2 is satisfied.

### [Termination condition 2]

- Any of the following conditions is met:
   (1) the door in question is closed; and
   (2) the ignition knob **7a** is returned to the LOCK position;

To save throughput, the predetermined time defined as an authentication cycle time may be varied between the case when the authentication fails and when the authentication succeeds. For example, the cycle time may be set to 3 second when the authentication has failed, whereas it is switched to 5 seconds when the authentication has succeeded).

Next, an explanation is given of the operation in closing the door. In this case, the initiation condition may be the following initiation condition 5.

### [Initiation condition 5]

- The following conditions are all met:
   (1) the ignition knob **7a** is not at the LOCK position;
   (2) the vehicle speed is less than 5 km/h; and
   (3) at least any of the doors which has been open is closed so that every door is closed.

   When the initiation condition 5 is met, the in-vehicle authentication is carried out. More specifically, an LF signal is sequentially sent from the four antennas including the in-vehicle front antenna **3f,** D-seat antenna **3a,** P-seat antenna **3b** and in-vehicle rear antenna **3d** which cover every region of the vehicle compartment and the LF sender antenna which received a response first is used for the authentication communication (antenna selection). Then, the authentication communication is implemented with the selected LF sender antenna.
   If the authentication fails, the external buzzer **4** and/or the internal buzzer of the meter unit **6** is actuated to give an alarm as described above for a predetermined time.
   The above-described in-vehicle authentication is carried out repeatedly every predetermined time until the following termination condition 3 is met. In the same manner as in opening the door, the alarm is continuously given until the authentication succeeds or the following termination condition 3 is met.

### [Termination condition 3]

- Any of the following conditions is met:
   (1) any of the doors is opened;
   (2) the ignition knob **7a** is returned to the LOCK position; and
   (3) the vehicle speed is 10 km/h or higher.

To save throughput, the predetermined time defined as an authentication cycle time may be varied between the case when the authentication fails and when the authentication succeeds. For example, the cycle time may be set to 5 second for 30 seconds after the authentication has failed, whereas it is set to 30 seconds in other time).

### [Measures against electromagnetic noise in controlling the alarm if the card key is taken out of the vehicle]

The operation for giving the alarm indicating that the card key has been taken outside the vehicle is executed basically in the above-described manner. By the way, the vehicle is generally provided with electric components such as audio equipment and lights (current consumers). These are connected to the alternator **30** in parallel to the battery **31** so that power is fed from the alternator **30** or the battery **31** through the power supply harness **33.** In general, a number of the power supply harnesses **33** are provided in various parts of the vehicle, including the vicinity of the dashboard as shown in FIG. **1** on which the card key is possibly placed.

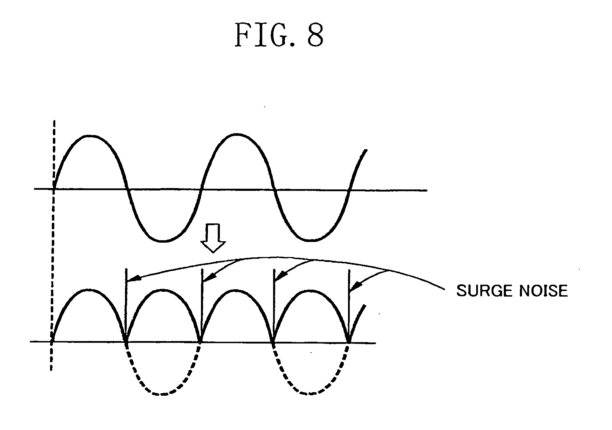

In general, the alternator **30** generates surge noise by the following mechanism. Since the alternator **30** is an alternating-current generator, it generates alternating voltage. However, since the battery **31** and the electric components mounted on the vehicle are ready for direct voltage, the alternating voltage needs to be rectified to direct voltage by a rectifier. As shown in FIG. **8,** the surge noise is generated when the alternating current is switched to the direct current (commutation). This surge noise is called switching noise or commutation noise.

Since the alternator **30** generates the surge noise in this manner, the power supply harness **33** causes electromagnetic noise derived from the surge noise of the alternator **30.** As mentioned above, the electromagnetic noise may cause jamming. Therefore, if the card key is placed near the power supply harness, the LF signal from the smart keyless controller **1** is hindered by the electromagnetic noise and the card key may fail to receive the request signal. In such a case, the smart keyless controller **1** may possibly fail to detect the presence of the card key **200** though in fact it is in the vehicle. As a result, an erroneous alarm may possibly be given.

Therefore, according to this embodiment, the alarming operation when the card key is taken out of the vehicle includes operation against the electromagnetic noise.

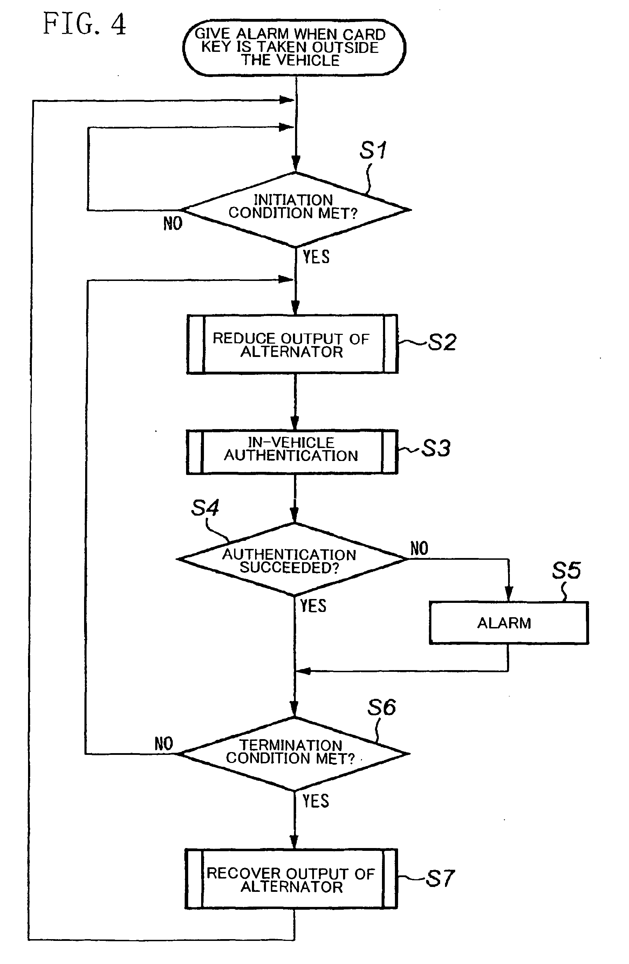

FIG. **4** is a flow chart illustrating the operation of giving the alarm when the card key is taken outside the vehicle executed by the smart keyless controller **1.**

First, the smart keyless controller **1** monitors whether the above-described initiation condition 4 or 5 is met (step **S1).** When the initiation condition 4 or 5 is met, the output of the alternator **30** is reduced (step **S2).** Details of the reduction step are described later.

Then, the above-described in-vehicle authentication is carried out (step **S3)** and a judgment is made whether the authentication has succeeded or not (step **S4).** If the authentication has failed, the external buzzer **4** and/or the internal buzzer of the meter unit **6** gives an alarm for a predetermined time as described above (step **S5).** The alarm is continuously given until the authentication succeeds or the termination condition corresponding to the initiation condition met in step **S1** (termination condition 2 or 3) is met.

Then, a judgment is made whether the termination condition is met (step **S6).** If the termination condition is not met, the operation returns to step **S2** and after an elapse of a predetermined time, i.e., the authentication cycle time, the following operations are repeated again. When the termination condition is met, the output of the alternator **30** is recovered (step **S7).** Then, the operation returns to step **S1** to repeat a series of steps.

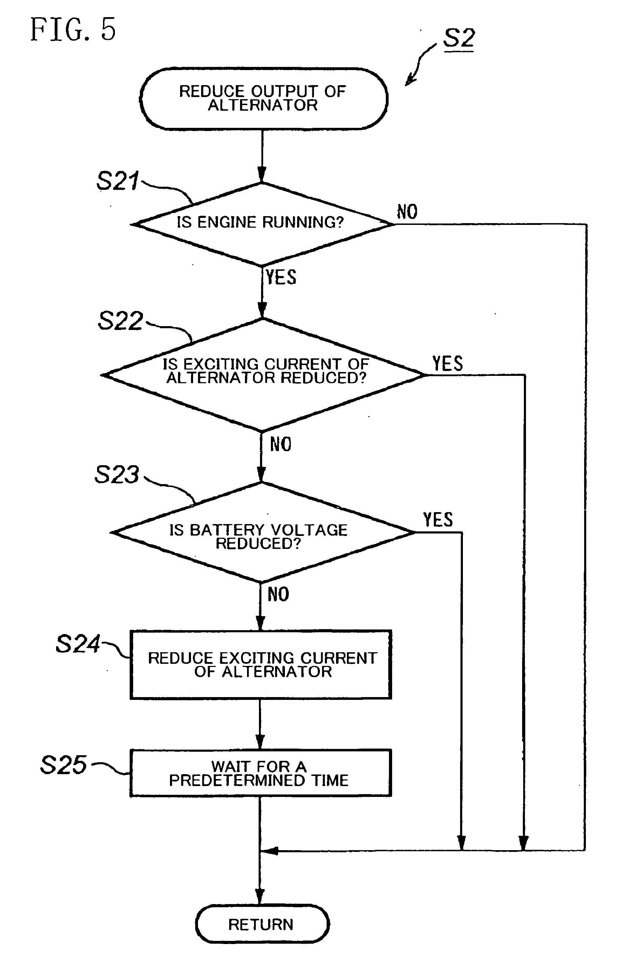

FIG. **5** is a flow chart illustrating how the output of the alternator is reduced in step **S2.**

First, a judgment is made whether the engine is running or not (step **S21).** More specifically, if the revolution sensor **17** senses that the engine revolutions are at 500 rpm or higher, it is judged that the engine is running. If the engine revolutions are less than 500 rpm, it is judged that the engine is stopped. When the engine is stopped, the reducing operation is cancelled because the alternator **30** does not generate the output.

If the engine is running, the operation goes to step **S22**. In other words, the step **S22** and the following steps are carried out only when the initiation condition 4 or 5 is met in step **S1** and it is recognized that the engine is running in step **S21.** For example, the condition that the engine is running and the initiation condition 4 are both met when it is sensed that the door is opened while the engine is running. The condition setting by combining step **S1** and step **S21** is merely an example and other conditions may be given. For example, instead of checking whether the initiation condition 4 or 5 is met, a decrease in vehicle speed below the predetermined speed (e.g., 10km/h) when the engine is running may be considered as the condition for going to step **S22.**

In step **S22,** whether or not the present exciting current of the alternator **30** has been reduced is checked. If the exciting current has already been reduced, there is no need to reduce the exciting current of the alternator **30** any more. Therefore, the reducing operation is cancelled.

Then, preferably, the voltage value of the battery **31** is obtained from the alternator ECU **32** to check whether the value is lower than a predetermined value or not (step **S32).** By so doing, it is judged whether or not the charged capacity of the battery **31** is reduced below a predetermined level. If the output of the alternator **30** is reduced when the charged capacity has been reduced below the predetermined level, the battery **31** is not charged by the alternator **30,** whereby the battery **31** may possibly become dead. Therefore, in such a case, the reducing operation does not proceed any more.

Where the conditions are met that the engine is running **(S21),** the exciting current of the alternator **30** is not lowered **(S22)** and the voltage value of the battery **31** is not lowered **(S23),** the exciting current is reduced (step **S24)** to decrease the output of the alternator **30.** For example, the exciting current of the alternator **30** is reduced by one-half of that of the normal state. Or alternatively, the exciting current of the alternator **30** may be reduced to zero to stop the power generation. More specifically, in this step, the smart keyless controller **1** outputs a control signal for reducing the exciting current to the alternator ECU **32** and the alternator ECU **32** performs the operation of reducing the exciting current in response to the signal. The smart keyless controller **1** may be configured to include the function of the alternator ECU **32.** In such a case, the smart keyless controller **1** directly controls the exciting current of the alternator **30.**

Basically the operation is finished at this time. Preferably, this operation is finished after a predetermined time (e.g., 1 second) has elapsed (step **S25)** from when the exciting current was reduced in step **S24.** With this standby time, the operation smoothly goes to the in-vehicle authentication of step **S3** after the surge noise of the alternator **30** has been surely reduced.

FIG. **6** is a flow chart illustrating how the operation of recovering the output of the alternator **30** is implemented in step **S7.**

First, a judgment is made whether or not the present exciting current of the alternator **30** has been reduced by the operation of reducing the output of the alternator **30** in step **S2** (step **S71).** If the exciting current has not been reduced but is a normal value, the operation is cancelled. Where the exciting current has been reduced, the exciting current is recovered to a normal value (step **S72).**

The rate of reducing the exciting current of the alternator **30** in step **S24** is preferably higher than the rate of recovering the reduced exciting current of the alternator **30** to the normal value. The faster the exciting current is reduced in step **S24,** the more quickly the in-vehicle authentication of step **S3** is carried out, thereby causing an alarm soon if the card key is taken outside the vehicle (step **S5).** Further, in recovering the exciting current of the alternator **30,** the engine torque suddenly drops and engine stall may possibly occur at worst. For these reasons, the recovering of the exciting current is preferably carried out slowly.

According to the capability of giving an alarm if the card key is taken out of the vehicle as described above, the output of the alternator **30** is reduced before the in-vehicle authentication of step **S3,** thereby reducing the electromagnetic noise derived from the surge noise of the alternator **30.** As a result, the LF signal sent in the course of the in-vehicle authentication of step **S3** is not hindered by the electromagnetic noise, preventing the occurrence of an erroneous alarm.

In the above description, the present invention has been explained in detail. The above-described embodiment is merely a preferable example of the present invention and it goes without saying that the configuration and the operations mentioned above may be modified in various ways.

### INDUSTRIAL APPLICABILITY

As described above, according to the smart keyless system control unit of the present invention, the influence of electromagnetic noise caused by surge noise of an alternator is avoided to allow detection of a portable unit in a vehicle with accuracy, thereby reducing of the possibility of causing an erroneous alarm. Thus, the present invention is useful for a vehicular smart keyless system.

## Claims

1. A control unit (1) of a smart keyless system comprising an on-vehicle system (100) mounted on a vehicle and a portable unit (200) which are configured to achieve wireless communication, wherein
the on-vehicle system (100) includes
a sender (3, 3f, 3a, 3b, 3c, 3d, 3s) which sends a request signal,
a receiver (2, 2a) which receives an ID signal sent by the portable unit (200) which has received the request signal, and
a control means (11) which commands the sender (3, 3f, 3a, 3b, 3c, 3d, 3s) to send the request signal when a predetermined condition is met and controls at least one of door lock/unlock and engine start permission when the authentication of the ID signal received by the receiver (2, 2a) succeeds,
the vehicle is provided with an alternator (30) which generates an output at least when an engine is running and feeds the output to electrical components (73) arranged in a vehicle compartment and/or near the vehicle compartment via a power supply harness (33), and
the control means (11) commands the sender (3, 3f, 3a, 3b, 3c, 3d, 3s) to send the request signal at least when the engine is running and gives a predetermined alarm when the authentication of the ID signal received by the receiver (2, 2a) does not succeed,
**characterized in that**
the control means includes a reduction control part which reduces the output of the alternator (30) when the sender (3, 3f, 3a, 3b, 3c, 3d, 3s) sends the request signal.

2. A control unit (1) of a smart keyless system according to claim 1, wherein
the control means (11) commands the sender (3, 3f, 3a, 3b, 3c, 3d, 3s) to send the request signal after a predetermined time has elapsed from when the output of the alternator (30) was reduced.

3. A control unit (1) of a smart keyless system according to claim 1, wherein
the control means (11) commands the sender (3, 3f, 3a, 3b, 3c, 3d, 3s) to send the request signal when a door of the vehicle is open and/or vehicle speed is not higher than a predetermined value and allows the reduction control part to reduce the output of the alternator (30) at the time when the door is opened and/or the vehicle speed is reduced to not higher than the predetermined value.

4. A control unit (1) of a smart keyless system according to claim 1, wherein
the vehicle is provided with a battery (31) which is charged by the output of the alternator (30) and
the reduction control part does not reduce the output of the alternator (30) when the charged capacity of the battery (31) is not higher than a predetermined level.

5. A control unit (1) of a smart keyless system according to claim 1, wherein
the reduction control part allows the output of the alternator (30) to recover after the request signal has been sent by the sender (3, 3f, 3a, 3b, 3c, 3d, 3s) and
the rate of reducing the output of the alternator (30) is higher than the rate of recovering the output of the alternator (30).

## Patentansprüche

1. Steuereinheit (1) für ein intelligentes schlüsselloses System, das ein an einem Fahrzeug angebrachtes, fahrzeugeigenes System (100) und eine tragbare Einheit (200) umfasst, die so gestaltet sind, dass eine drahtlose Kommunikation möglich ist, wobei
das fahrzeugeigene System (100) Folgendes umfasst:
einen Sender (3, 3f, 3a, 3b, 3c, 3d, 3s), der ein Anforderungssignal sendet,
einen Empfänger (2, 2a), der ein ID-Signal empfängt, das von der tragbaren Einheit (200) gesendet wurde, die das Anforderungssignal empfangen hat, und
eine Steuereinrichtung (11), die dem Sender (3, 3f, 3a, 3b, 3c, 3d, 3s) befiehlt, das Anforderungssignal zu senden, wenn eine vorbestimmte Bedingung erfüllt ist, und mindestens eines von Türverriegelung/-entriegelung und Motorstarterlaubnis steuert, wenn die Authentifizierung des von dem Empfänger (2, 2a) empfangenen ID-Signals erfolgreich ist,
das Fahrzeug mit einer Lichtmaschine (30) versehen ist, die zumindest dann einen Ausgang erzeugt, wenn ein Motor läuft, und den Ausgang über einen der Stromversorgung dienenden Kabelbaum (33) elektrischen Bauteilen (73) zuführt, die in einem Fahrzeugraum und/oder in der Nähe des Fahrzeugraums angeordnet sind, und
die Steuereinrichtung (11) dem Sender (3, 3f, 3a, 3b, 3c, 3d, 3s) befiehlt, das Anforderungssignal mindestens dann zu senden, wenn der Motor läuft, und einen vorbestimmten Alarm abgibt, wenn die Authentifizierung des von dem Empfänger (2, 2a) empfangenen ID-Signals nicht erfolgreich ist,
**dadurch gekennzeichnet, dass**
die Steuereinrichtung ein Reduktionssteuerteil umfasst, das den Ausgang der Lichtmaschine (30) reduziert, wenn der Sender (3, 3f, 3a, 3b, 3c, 3d, 3s) das Anforderungssignal sendet.

2. Steuereinheit (1) für ein intelligentes schlüsselloses System nach Anspruch 1, wobei die Steuereinrichtung (11) dem Sender (3, 3f, 3a, 3b, 3c, 3d, 3s) befiehlt, das Anforderungssignal zu senden, nachdem eine vorbestimmte Zeit ab Reduktion des Ausgangs der Lichtmaschine (30) verstrichen ist.

3. Steuereinheit (1) für ein intelligentes schlüsselloses System nach Anspruch 1, wobei die Steuereinrichtung (11) dem Sender (3, 3f, 3a, 3b, 3c, 3d, 3s) befiehlt, das Anforderungssignal zu senden, wenn eine Tür des Fahrzeugs offen ist und/oder die Fahrzeuggeschwindigkeit nicht höher ist als ein vorbestimmter Wert, und dem Reduktionssteuerteil erlaubt, den Ausgang der Lichtmaschine dann zu reduzieren, wenn die Tür geöffnet ist und/oder die Fahrzeuggeschwindigkeit soweit reduziert ist, dass sie nicht höher ist als der vorbestimmte Wert.

4. Steuereinheit (1) für ein intelligentes schlüsselloses System nach Anspruch 1, wobei das Fahrzeug mit einer Batterie (31) versehen ist, die durch den Ausgang der Lichtmaschine (30) geladen wird, und
das Reduktionssteuerteil den Ausgang der Lichtmaschine (30) nicht reduziert, wenn die geladene Kapazität der Batterie (31) nicht höher ist als ein vorbestimmtes Niveau.

5. Steuereinheit (1) für ein intelligentes schlüsselloses System nach Anspruch 1, wobei das Reduktionssteuerteil erlaubt, dass sich der Ausgang der Lichtmaschine (30) erholt, nachdem das Anforderungssignal durch den Sender (3, 3f, 3a, 3b, 3c, 3d, 3s) gesendet wurde, und
der Grad der Reduktion des Ausgangs der Lichtmaschine (30) höher ist als der Grad der Erholung des Ausgangs der Lichtmaschine (30).

## Revendications

1. Unité de commande (1) d'un système intelligent sans clé comprenant un système embarqué (100) monté sur un véhicule et une unité portative (200) configurés pour établir des communications sans fil,
le système embarqué (100) comprenant
un émetteur (3, 3f, 3a, 3b, 3c, 3d, 3s) qui émet un signal de demande,
un récepteur (2, 2a) qui reçoit un signal d'identification émis par l'unité portative (200) qui a reçu le signal de demande, et
un moyen de commande (11) qui donne à l'émetteur (3, 3f, 3a, 3b, 3c, 3d, 3s) l'instruction d'émettre le signal de demande lorsqu'une condition prédéterminée est remplie et qui commande au moins l'une des autorisations de verrouillage/déverrouillage des portes et de démarrage du moteur lorsque l'authentification du signal d'identification reçu par le récepteur (2, 2a) réussit,
le véhicule étant équipé d'un alternateur (30) qui génère une puissance de sortie au moins quand un moteur tourne et alimente la sortie vers des composants électriques (73) disposés dans un compartiment du véhicule et/ou à proximité du compartiment du véhicule par l'intermédiaire d'un faisceau d'alimentation (33), et
le moyen de commande (11) donnant à l'émetteur (3, 3f, 3a, 3b, 3c, 3d, 3s) l'instruction d'émettre le signal de demande au moins lorsque le moteur tourne et émettant une alarme prédéterminée lorsque l'authentification du signal d'identification reçu par le récepteur (2, 2a) échoue,
**caractérisée en ce que**
le moyen de commande (11) comprend un élément de commande réducteur qui réduit la puissance de sortie de l'alternateur (30) lorsque l'émetteur (3, 3f, 3a, 3b, 3c, 3d, 3s) émet le signal de demande.

2. Unité de commande (1) d'un système intelligent sans clé selon la revendication 1,
le moyen de commande (11) donnant à l'émetteur (3, 3f, 3a, 3b, 3c, 3d, 3s) l'instruction d'émettre le signal de demande après qu'une période prédéterminée s'est écoulée depuis le moment où la puissance de sortie de l'alternateur (30) a été réduite.

3. Unité de commande (1) d'un système intelligent sans clé selon la revendication 1,
le moyen de commande (11) donnant à l'émetteur (3, 3f, 3a, 3b, 3c, 3d, 3s) l'instruction d'émettre le signal de demande lorsqu'une porte du véhicule a été ouverte et/ou la vitesse du véhicule n'est pas supérieure à une valeur prédéterminée, et permet à l'élément de commande réducteur de réduire la puissance de sortie de l'alternateur (30) au moment où la porte est ouverte et/ou la vitesse du véhicule est réduite à un niveau qui n'est pas supérieur à la valeur prédéterminée.

4. Unité de commande (1) d'un système intelligent sans clé selon la revendication 1,
le véhicule étant équipé d'une batterie (31) qui est chargée par la puissance de sortie de l'alternateur (30) et
l'élément de commande réducteur ne réduisant pas la puissance de sortie de l'alternateur (30) lorsque la capacité chargée de la batterie (31) n'est pas supérieure à un niveau prédéterminé.

5. Unité de commande (1) d'un système intelligent sans clé selon la revendication 1,
l'élément de commande réducteur permettant à la puissance de sortie de l'alternateur (30) de se reconstituer après que le signal de demande a été émis par l'émetteur (3, 3f, 3a, 3b, 3c, 3d, 3s), et
le taux de réduction de la puissance de sortie de l'alternateur (30) étant supérieur au taux de récupération de la puissance de sortie de l'alternateur (30).
